# EUROPEAN PATENT APPLICATION

(11) **EP 4 001 869 A1**
(43) Date of publication of application: **25.05.2022**
(21) Application number: 20206883.9
(22) Date of filing: 11.11.2020
(51) Int. Cl.: G01K 1/024, G01K 1/16

(54) **WIRELESS APPARATUS FOR MEASURING TEMPERATURE FROM AN ELECTRICAL CONDUCTOR IN AN ELECTRICAL SUBSTATION OF AN ELECTRICAL GRID**

(71) Applicant: Haltian Oy, 90230 Oulu (FI)
(72) Inventor: Kujala, Pertti, 90230 Oulu (FI)
(74) Representative: Kolster Oy Ab

(57) **Abstract**

Wireless apparatus (100) for measuring temperature from electrical conductor (130) in electrical substation (132) of electrical grid (134). The apparatus (100) includes: one or more batteries (106); an electrical temperature sensor (110) configured to measure the temperature of the electrical conductor (130); a wireless transceiver (112) configured to transmit the measured temperature; a casing (102) configured to accommodate the one or more batteries (106), the electrical temperature sensor (110), and the wireless transceiver (112); a thermal insulator (126) configured to thermally insulate the casing (102) from a surface of the electrical conductor (130); and a thermal conductor (122), mechanically coupled to the electrical temperature sensor (110), and configured to extend through the thermal insulator (126) to the surface of the electrical conductor (130), whereby the electrical temperature sensor (110) is configured to measure the temperature of the electrical conductor (130) via the thermal conductor (122).

## Description

### FIELD

Various embodiments relate to a wireless apparatus for measuring a temperature from an electrical conductor in an electrical substation of an electrical grid.

### BACKGROUND

An electrical grid operating in a regional, national or transnational level delivers electricity. The grid comprises generating stations producing electric power, electrical substations stepping electrical voltage up for transmission or down for distribution, high-voltage transmission lines, and distribution lines. The electrical substation comprises transformers and various mechanical components such as joints, switches, connectors, and power rods. One electrical substation may have a switching field comprising 300 mechanical components like switches, for example. The mechanical components will get dirty and possibly oxidize, which will increase resistance, which in turn will heat up the components. The overheating may cause unplanned power breaks. The mechanical components may be photographed with a thermographic camera every two years, but it requires manual work, and still some problems may occur.

US 7,336,202 B2 discloses a temperature monitoring device using a lithium battery, and an insulating member of material such as silicon with good thermal conductivity between a temperature sensor section and a cable clamp.

US 2019/0101452 A1 discloses a temperature sensor device with a thermostatic switch connected between a battery and a sensor module so that electrical current is provided from the battery to the sensor module only when the thermostatic switch is closed.

US 9,365,223 B2 discloses a system for monitoring railcar performance. A temperature mote with a spaced probe is used to monitor the temperature of a liquid stored within a tank on a rail tank car that is covered with a fairly thick insulation jacket having an outside cover. A small opening is cut into the jacket allowing the probe head to be attached to the cleaned outside surface of the vessel with thermally conductive epoxy.

### BRIEF DESCRIPTION

According to an aspect, there is provided subject matter of independent claims. Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
FIG. 1 illustrates embodiments of a wireless apparatus for measuring a temperature from an electrical conductor in an electrical substation of an electrical grid;
FIG. 2 illustrates an embodiment of an external appearance of the wireless apparatus;
FIG. 3 is a partly exploded view of an embodiment of the wireless apparatus;
FIG. 4 is a bottom view of an embodiment of the wireless apparatus;
FIG. 5 is a longitudinal crosscut view of an embodiment of the wireless apparatus;
FIG. 6 is a detailed view of FIG. 5; and
FIG. 7 is a transversal crosscut view of an embodiment of the wireless apparatus.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

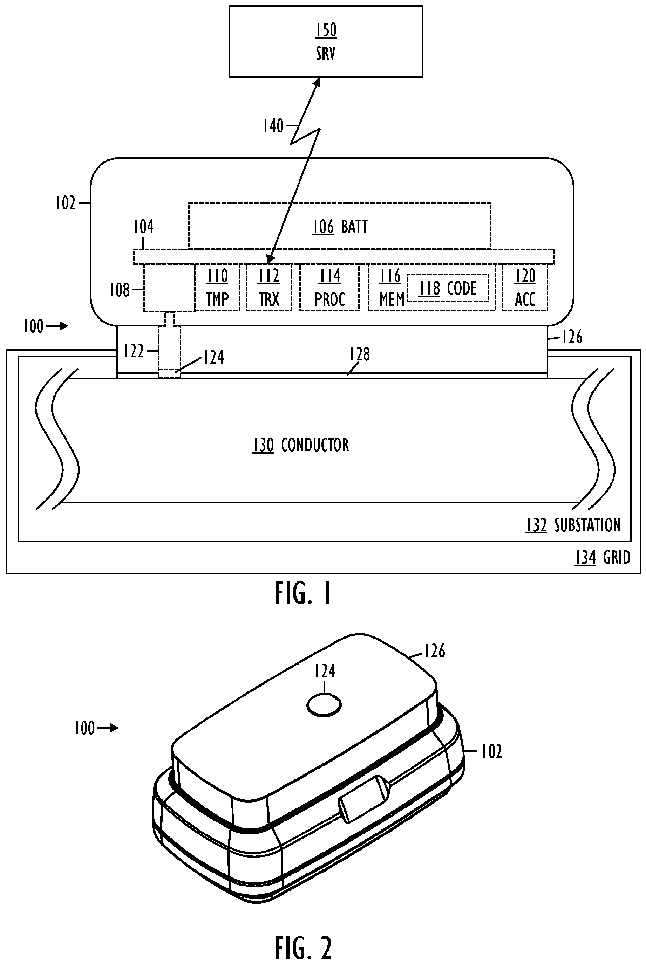

Let us first study FIG. 1, which illustrates embodiments of a wireless apparatus 100 for measuring a temperature from an electrical conductor 130 in an electrical substation 132 of an electrical grid 134.

In an embodiment, the wireless apparatus 100 is configured to operate in an outdoor environment of the electrical substation 132.

In an embodiment, the wireless apparatus 100 is configured to measure the electrical conductor 130 transporting electricity of one kilovolt or more. In Finland, a typical high-voltage electrical substation 132 operates in 110 kilovolts or 400 kilovolts.

In an embodiment, the electrical conductor 130 measured by the wireless apparatus 100 comprises one or more of the following: a joint, a switch, a connector, a power rod.

The wireless apparatus 100 comprises one or more batteries 106. In an embodiment, the one or more batteries 106 are of a non-heat resistant type. An example of such batteries 106 is alkaline batteries, which have a relatively good energy density and shelf life, but are not protected against the possibly high surface temperature of electrical conductor 130 in an order of 100 degrees Celsius or more. Some alkaline batteries are designed to be recharged a few times. In any case, the non-heat resistant type of batteries 106 are cheaper compared to the heat resistant type of batteries, and their use is therefore desirable as the number of required wireless apparatuses 100 in just one electrical substation 132 may be hundreds.

The wireless apparatus 100 comprises an electrical temperature sensor 110, powered by the one or more batteries 106, and configured to measure the temperature of the electrical conductor 130.

The wireless apparatus 100 also comprises a wireless transceiver 112, powered by the one or more batteries 106, and configured to transmit the measured temperature. The wireless transceiver 112 may be selected so that its range is adequate for communicating 140 with a server 150, or with a router configured to collect data locally from a plurality of wireless apparatuses 100 and transmit it to the server 150. The range may also be extended by a repeater functionality such as that used in a mesh network. The server 150 may be monitoring a plurality of wireless apparatuses 100 distributed within one electrical substation 132. Also, the power consumption of the wireless transceiver 112 may be taken into account in the selection. The server 150 may monitor a temperature trend received from each wireless apparatus 100 to predict and hinder a future malfunction of the electrical conductor 130.

The radio transceiver 112 may operate using a standard or proprietary wireless communication protocol. The radio transceiver 112 may utilize a cellular radio network (GSM, GPRS, EGPRS, WCDMA, UMTS, 3GPP, IMT, LTE, LTE-A, 3G, 4G, 5G etc.), a wireless local area network (such as WLAN, Wi-Fi, etc.), a short-range radio network (such as Bluetooth or Bluetooth Low Energy BLE, etc.), or a wireless mesh network, for example. The use of the cellular radio network may necessitate use of a subscriber identity module (SIM), either as a physical chip, or as an embedded-SIM (eSIM), for example.

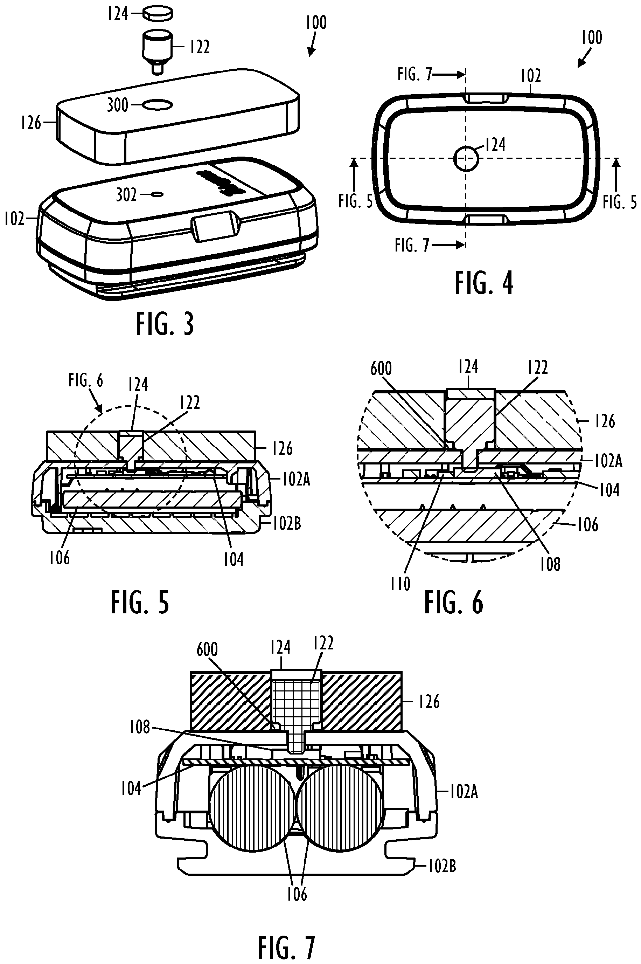

The wireless apparatus 100 comprises a casing 102 configured to accommodate the one or more batteries 106, the electrical temperature sensor 110, and the wireless transceiver 112. Any additional electronics is also encapsulated by the casing 102. As shown in FIG. 1, the electronics may be supported and electrically connected by a printed circuit board 104 with appropriate conductive tracks, pads, and soldering. In an embodiment, the casing 102 is configured to protect the electronics of the wireless apparatus 100 against dust and moisture. As shown in FIG. 5 and FIG. 7, the casing 102 may comprise two halves 102A, 102B. The halves 102A, 102B may be mechanically snap-fitted together, but they may also be coupled with each other by ultrasonic welding, by screws, by an adhesive, or by some other mechanical joining method. The casing 102 may be manufactured from a suitable synthetic material such as plastic, or a suitable metal.

The wireless apparatus 100 comprises a thermal insulator 126 configured to thermally insulate the casing 102 from a surface of the electrical conductor 130. In an embodiment, the thermal insulator 126 is attached to an external surface of the casing 102. In this way, the casing 102 protects the electronics, and the heat transfer from the electrical conductor 130 to the casing 102 is minimized. In an embodiment, the thermal insulator 126 is configured to shield the one or more batteries 106 from an excessive heat generated by the electrical conductor 130 due to corrosion, dirt or a failure.

In an embodiment, the thermal insulator 126 is configured and dimensioned to protect the one or more batteries 106 being of a non-heat resistant type against the heat generated by the electrical conductor 130.

In an embodiment, the thermal insulator 126 is configured to thermally insulate against a temperature in an order of 100 degrees Celsius or more of the surface of the electrical conductor 130.

FIG. 2 illustrates an external appearance of the wireless apparatus 100 showing the casing 102 and the thermal insulator 126.

The wireless apparatus 100 also comprises a thermal conductor 122, mechanically coupled to the electrical temperature sensor 110, and configured to extend through the thermal insulator 126 to the surface of the electrical conductor 130, whereby the electrical temperature sensor 110 is configured to measure the temperature of the electrical conductor 130 via the thermal conductor 122. In this way, the temperature may be measured, without transferring too much heat from the electrical conductor 130 to the inner electronics of the wireless apparatus 100. In an embodiment, the thermal conductor 122 has an electric pad 124, 128 at both ends, the first electric pad 108 coupling the thermal conductor 122 with the electrical temperature sensor 110, and the second electric pad 124 coupling the thermal conductor 122 with the electrical conductor 130. The first electric pad 108 may be etched on the printed circuit board 104. FIG. 4 illustrates a bottom view of the wireless apparatus 100 showing the second electric pad 124. FIG. 5 illustrates a longitudinal crosscut along a first axis shown in FIG. 4, and FIG. 6 is a detailed view inside a circle drawn in FIG. 5. FIG. 7 illustrates a transversal crosscut view along a second axis shown in FIG. 4. As shown, the second electric pad 124 may protrude from the surrounding thermal insulator 126 to ensure a good contact with the electrical conductor 130. FIG. 6 and FIG. 7 also shows a glue groove 600 dimensioned to contain an appropriate amount of adhesive to fix the thermal conductor 122 with the thermal insulator 126.

FIG. 3 is a partly exploded view of an embodiment of the wireless apparatus 100 showing the casing 102, the thermal insulator 126, the thermal conductor 122, and the thermal pad 124.

FIG. 3 also illustrates an embodiment, wherein the thermal insulator 126 comprises a thermal insulation plate, and the thermal conductor 122 comprises a thermal conduction pin. As shown, the thermal conduction pin is fitted into an aperture 300 extending through the thermal insulation plate.

FIG. 3 also illustrates an embodiment, wherein the thermal insulator 126 is attached to an external surface of the casing 102, and the thermal conductor 122 is configured to fit into an aperture 302 extending through the casing 102.

In an embodiment illustrated in FIG. 1, the wireless apparatus 100 comprises an adhesive 128 on an external surface of the thermal conductor 126 configured to attach the wireless apparatus 100 to a metal surface of the electrical conductor 130. In this way, the adhesive 128 may be a thin layer on top of the thermal conductor 126, possibly protected by a paper strip that is removed before attaching the wireless apparatus 100 to the electrical conductor 130. The adhesive 128 may be strong and optimized for a metal surface in a harsh outdoor environment.

In an embodiment, the thermal insulator 126 is manufactured from a synthetic material such as from a foam type of material. In an embodiment, the thermal conductor 122 is manufactured from a metallic material. In an alternative embodiment, the thermal conductor 122 is manufactured from a ceramic material having a good thermal conductivity but a poor electrical conductivity. The ceramic material thermal conductor 122 may protect the electronics of the wireless apparatus 100 against a power surge from the electrical conductor 130.

In an embodiment, the wireless apparatus 100 comprises an accelerometer 120 configured to measure a vibration of the electrical conductor 130. The accelerometer 120 may measure the vibration in one, three or six dimensions, for example. Additionally, the accelerometer 120 may belong to an inertial measurement unit, which, besides the accelerometer 120, may also comprise a gyroscope and a magnetometer. The wireless transceiver 112 is configured to transmit the measured vibration to the server 150 described in FIG. 1. The vibration may indicate a malfunction, a phenomenon caused by specific weather conditions, a position of a switch (or a joint, a connector or a power rod) such as an opening or closing angle of the switch, or a malfunction of the switch (or the joint, the connector or the power rod). The position or malfunction of the switch may be detected analyzing a mechanical motion of the switch based on the vibration, and optionally also based on the data obtained from the gyroscope and possibly also from the magnetometer. If the switch does not move adequately or at all as the switch is operated (by remote-control, for example), a malfunction of the switch is detected.

In an embodiment, the wireless apparatus 100 comprises one or more memories 116 including computer program code 118, and a processor 114 configured to execute the computer program code 118 to cause the wireless apparatus 100 to perform the measurement and the transmission periodically. The periodic measurement and transmission interval may be five minutes, for example, which may make the one or more batteries 106 last even five years.

The term 'processor' 114 refers to a device that is capable of processing data. When designing the implementation of the processor 114, a person skilled in the art will consider the requirements set for the size and power consumption of the wireless apparatus 100, the necessary processing capacity, production costs, and production volumes, for example.

The term 'memory' 116 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

A non-exhaustive list of implementation techniques for the processor 114 and the memory 116 includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The computer program code 118 may be implemented by software. In an embodiment, the software may be written by a suitable programming language, and the resulting executable code may be stored in the memory 116 and executed by the processor 114.

The computer program code 118 implements an algorithm for controlling the measurement and the transmission. The computer program code 118 may be coded as a computer program (or software) using a programming language, which may be a high-level programming language, such as C, C++, or Java, or a low-level programming language, such as a machine language, or an assembler, for example. The computer program code 118 may be in source code form, object code form, executable file, or in some intermediate form. There are many ways to structure the computer program code 118: the operations may be divided into modules, sub-routines, methods, classes, objects, applets, macros, etc., depending on the software design methodology and the programming language used. In modern programming environments, there are software libraries, i.e. compilations of ready-made functions, which may be utilized by the computer program code 118 for performing a wide variety of standard operations. In addition, an operating system (such as a general-purpose operating system) may provide the computer program code 118 with system services.

In an embodiment, the processor 114 may be implemented as a microprocessor implementing functions of a central processing unit (CPU) on an integrated circuit. The CPU is a logic machine executing the computer program code 118. The CPU may comprise a set of registers, an arithmetic logic unit (ALU), and a control unit (CU). The control unit is controlled by a sequence of the computer program code 118 transferred to the CPU from the (working) memory 116. The control unit may contain a number of microinstructions for basic operations. The implementation of the microinstructions may vary, depending on the CPU design.

In an embodiment, the processor 114, the one or more memories 116, and the radio transceiver 112 are implemented as an integrated microcontroller, possibly with a full suite of program and system development tools, maybe even with software libraries and a real-time operating system.

Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

1. A wireless apparatus (100) for measuring a temperature from an electrical conductor (130) in an electrical substation (132) of an electrical grid (134), comprising:
one or more batteries (106);
an electrical temperature sensor (110), powered by the one or more batteries (106), and configured to measure the temperature of the electrical conductor (130);
a wireless transceiver (112), powered by the one or more batteries (106), and configured to transmit the measured temperature;
a casing (102) configured to accommodate the one or more batteries (106), the electrical temperature sensor (110), and the wireless transceiver (112);
a thermal insulator (126) configured to thermally insulate the casing (102) from a surface of the electrical conductor (130); and
a thermal conductor (122), mechanically coupled to the electrical temperature sensor (110), and configured to extend through the thermal insulator (126) to the surface of the electrical conductor (130), whereby the electrical temperature sensor (110) is configured to measure the temperature of the electrical conductor (130) via the thermal conductor (122).

2. The apparatus of claim 1, wherein the thermal insulator (126) comprises a thermal insulation plate, and the thermal conductor (122) comprises a thermal conduction pin, and the thermal conduction pin is fitted into an aperture (300) extending through the thermal insulation plate.

3. The apparatus of any preceding claim, wherein the wireless apparatus (100) comprises:
an adhesive (128) on an external surface of the thermal conductor (126) configured to attach the wireless apparatus (100) to a metal surface of the electrical conductor (130).

4. The apparatus of any preceding claim, wherein the wireless apparatus (100) comprises:
an accelerometer (120) configured to measure a vibration of the electrical conductor (130);
and the wireless transceiver (112) is configured to transmit the measured vibration.

5. The apparatus of any preceding claim, wherein the thermal insulator (126) is configured to shield the one or more batteries (106) from an excessive heat generated by the electrical conductor (130) due to corrosion, dirt or a failure.

6. The apparatus of any preceding claim, wherein the casing (102) is configured to protect electronics of the wireless apparatus (100) against dust and moisture.

7. The apparatus of any preceding claim, wherein the thermal insulator (126) is attached to an external surface of the casing (102), and the thermal conductor (122) is configured to fit into an aperture (302) extending through the casing (102).

8. The apparatus of any preceding claim, wherein the wireless apparatus (100) is configured to operate in an outdoor environment of the electrical substation (132).

9. The apparatus of any preceding claim, wherein the wireless apparatus (100) is configured to measure the electrical conductor (130) transporting electricity of one kilovolt or more.

10. The apparatus of any preceding claim, wherein the electrical conductor (130) measured by the wireless apparatus (100) comprises one or more of the following: a joint, a switch, a connector, a power rod.

11. The apparatus of any preceding claim, wherein the thermal insulator (126) is configured and dimensioned to protect the one or more batteries (106) being of a non-heat resistant type against the heat generated by the electrical conductor (130).

12. The apparatus of any preceding claim, wherein the thermal insulator (126) is configured to thermally insulate against a temperature in an order of 100 degrees Celsius or more of the surface of the electrical conductor (130).

13. The apparatus of any preceding claim, wherein the thermal insulator (126) is manufactured from a synthetic material, and the thermal conductor (122) is manufactured from a metallic material.

14. The apparatus of any preceding claim, wherein the thermal conductor (122) is manufactured from a ceramic material having a good thermal conductivity but a poor electrical conductivity.

15. The apparatus of any preceding claim, wherein the wireless apparatus (100) comprises:
one or more memories (116) including computer program code (118); and
a processor (114) configured to execute the computer program code (118) to cause the wireless apparatus (100) to perform the measurement and the transmission periodically.
